# EUROPÄISCHE PATENTSCHRIFT

(11) **EP 1 129 879 B1**
(45) Veröffentlichungstag und Bekanntmachung des Hinweises auf die Patenterteilung: **25.04.2007**
(21) Anmeldenummer: 01103914.6
(22) Anmeldetag: 17.02.2001
(51) Int. Cl.: B60J 7/043, B60J 7/04, B60J 7/02

(54) **Vorrichtung zum Steuern der Bewegung eines Fahrzeugschiebedachdeckels**
Actuation device for the displacement of a sliding roof panel of motor vehicle
Dispositif d'actionnement pour le déplacement d' un panneau de toit coulissant pour véhicule

(30) Priorität: 29.02.2000 DE 10009387
(43) Veröffentlichungstag der Anmeldung: 05.09.2001
(73) Patentinhaber: Webasto Vehicle Systems International GmbH, 82131 Stockdorf (DE)
(72) Erfinder: Pagano, Amleto, 10072 Caselle T.SE (IT)
(74) Vertreter: Wiese, Gerhard

(56) Entgegenhaltungen:
- EP-A- 0 547 375
- DE-A- 4 320 106
- DE-U- 29 811 016

## Beschreibung

Die Erfindung betrifft eine Vorrichtung zum Steuern der Bewegung eines Schiebedachdeckels an einem Fahrzeug gemäß dem Oberbegriff des Patentanspruchs 1.

Die DE 43 20 106 A1 zeigt eine Vorrichtung zum Steuern der Bewegung eines Schiebedachdeckels an einem Fahrzeug, bei der zunächst der Deckel um eine vordere Schwenkachse nach oben ausgestellt und dann in dieser Stellung nach hinten gefahren wird, um die Dachöffnung freizugeben. Die Vorrichtung hat eine Gleitschiene mit einer Führungsbahn, in der ein Schlitten längs zum Fahrzeug verschiebbar gelagert ist. In der Führungsbahn ist weiterhin ein zweiarmiger Schwenkhebel über eine vordere Kipphebelrolle und einen mittigen Dreh- und Lagerpunkt gelagert. Der Deckel ist über einen Deckelhalter sowohl mit dem Schwenkhebel als auch mit dem Schlitten verbunden. Der Deckelhalter ist über eine an seinem vorderen Endabschnitt angeordnete Gabel in der Kipphebelrolle gelagert und bildet die Schwenkachse für die Ausstellbewegung des Deckels. Der Schlitten ist mit einem Ausstellzapfen versehen, der in eine am Deckelhalter angeordnete Ausstellkulisse eingreift. Weiterhin ist am Deckelhalter eine Steuerkulisse angeordnete, die mit einem am Schwenkhebel angeordneten Steuerzapfen in Eingriff ist, um während der Ausstellbewegung eine kleine horizontale, nach hinten gerichtete Bewegung des Deckels zu bewirken. Der hintere Arm des Schwenkhebels hat ein Verriegelungselement, das hinter einem Führungssteg arretierbar ist, um während der durch die Bewegung des Schlittens über die Ausstellkulisse bewirkte Ausstellbewegung des Deckes die horizontale Bewegung des Deckels nach hinten zu unterbinden. An der vorderen, unteren Endseite der Führungsbahn ist eine Aussparung zum Einrasten der Kipphebelrolle vorgesehen. Ausgehend von der geschossenen Position läuft der Öffnungsvorgang dieser Steuerungsanordnung wie folgt ab. Der Schlitten wird nach hinten bewegt, so daß der Deckel durch die Ausstellkulisse um die zwischen Kipphebelrolle und Gabel ausgebildete Schwenkachse nach außen oben verschwenkt wird. Gleichzeitig verursacht die Steuerkulisse eine kleine Bewegung des Deckels nach hinten, so daß die Vorderkante des Deckels einen kleinen Abstand zu einer vorderen quer verlaufenden Dichtung bekommt. Während dieses Vorgangs ist das Verriegelungselement des Schwenkhebels in der verriegelten Stellung und die Kipphebelrolle befindet sich abgesenkt in der vorderen Aussparung. Ist die Schwenkbewegung des Deckels abgeschlossen, so gibt der Schlitten die Verriegelung des Verriegelungselements frei, wobei das Verriegelungselement noch in verriegelter Stellung verbleibt. Mittels des Ausstellzapfens und des hinteren Anschlags der Ausstellkulisse wird über die Steuerkulisse und den Steuerzapfen eine nach hinten gerichtete Zugkraft vom Schlitten auf den Schwenkhebel übertragen, wodurch die Kipphebelrolle des Schwenkhebels aus der Aussparung am vorderen Ende der Führungsbahn herausgezogen wird und dabei eine kleine Vertikalbewegung nach oben erfährt. Bei dieser Bewegung wird der Schwenkhebel um den mittigen Dreh- und Lagerpunkt im Uhrzeigersinn verschwenkt, wobei das Verriegelungselement aus der Verriegelungsposition hinter dem Führungssteg herausgeschwenkt wird. Nach dieser Freigabe kann der Schlitten den ausgestellten Deckel nach hinten bewegen. Die kleine Vertikalbewegung nach oben beim Herausziehen der Kipphebelrolle aus der Aussparung dient dazu, die Vorderkante des Deckels über die vordere quer verlaufende Dichtung zu heben.

Nachteilig an dieser Anordnung ist, daß die Entriegelungsbewegung des Verriegelungselements gegenüber dem Führungssteg über eine große Anzahl von Kontakt punkten vom Schlitten auf den Schwenkhebel übertragen wird. Damit diese Anordnung zuverlässig funktioniert, ist es erforderlich, daß eine hohe Positionsgenauigkeit zwischen hinterem Anschlag der Ausstellkulisse, der Position der Steuerkulisse, der Position des Steuerzapfens am Schwenkhebel, des Abstands zwischen Kipphebelrolle und Verriegelungselement und des Abstands zwischen Aussparung und Endanschlag der Führungsbahn und dem Führungssteg erforderlich ist. Durch die erforderlichen geringen Toleranzen wird eine hochpräzise Fertigung erforderlich, die mit entsprechenden Kosten verbunden ist. Weiterhin ist nachteilig, daß die Vertikalbewegung nach oben beim Herausziehen der Kipphebelrolle aus der Aussparung mit der Entriegelungsbewegung gekoppelt ist und gleichzeitig erfolgt. Hierdurch ist der Hub nach oben konstruktionsbedingt begrenzt, was dazu führt, daß die Vorderkante des Deckels nicht hoch genug über die vordere quer verlaufende Dichtung angehoben wird. Dies wiederum kann zu Beschädigung der Dichtung führen oder es muß einen kleine Dichtung mit weniger und damit ungenügender Presswirkung verwendet werden. Nachteilig ist auch, daß die vertikale Hubbewegung gleichzeitig mit Entriegelung des Verriegelungselements gegenüber dem Führungssteg erfolgt, was leicht zum Verhaken des Schwenkhebels führen kann, wenn die Anordnung nicht präzise gefertigt und montiert ist.

Aus der DE 298 11 016 U1 ist eine weitere Verstellvorrichtung für ein Sonnendach eines Fahrzeugs bekannt, bei der die Verriegelung während der Schwenkbewegung über einen in einer Aussparung eines mehrteiligen Schlittens querverschiebbar gelagerten Riegelstein erfolgt, der durch Steuerschrägen gesteuert wird, die an der Führungsschiene ausgebildet sind. Auch hier ist neben der aufwendigen Bearbeitung der Steuerschrägen eine hochpräzise Abstimmung einer Vielzahl von bewegten, an der Verriegelung und Entriegelung beteiligten Komponenten notwendig.

Aus der DE 93 02 762 U1 ist eine Vorrichtung bekannt, bei der der Antriebsschlitten zwei Kulissen aufweist, die die Ausstell- und Verschiebebewegung des Deckels steuern. Am Antriebschlitten ist ferner ein Stift vorgesehen, der in eine Kulisse eines Verbindungselements eingreift, an dessen unterem Ende ein Vorsprung angeordnet ist, der im Eingriff mit einer Vertiefung am Dachrahmen steht. Das Verbindungselement bildet mit einem Anlenkpunkt an seinem hinteren Ende gleichzeitig einen Drehpunkt eines hinteren Ausstellhebels und mit einem vorderen vertikalen Langloch gemeinsam mit der vorderen Kulisse am Antriebsschlitten eine Lagerung für einen Bolzen am unteren Ende eines vorderen Deckelträgers. Durch die drehbare Lagerung des Verbindungselements am hinteren Drehpunkt des Ausstellhebels ist die Lage des Drehpunkts durch die Verbindung zur Ausstellmechanik stark toleranzbehaftet. Bei einer Verschiebung des Antriebschlittens zur Anhebung der Kulisse durch den Stift zum Entriegeln des Rastvorsprungs wird zwangsweise auch der hintere Drehpunkt der AussteHmechanik verschoben, wodurch eine weitere Bewegung des Deckels verursacht wird. Die Verriegelungsvorrichtung ist somit nicht unabhängig, d.h. ohne eine Bewegung der Ausstellmechanik und somit des Deckels entriegelbar.

Der vorliegenden Erfindung liegt die Aufgabe zugrunde, eine Vorrichtung zum Steuern der Bewegung eines Schiebedachdeckels an einem Fahrzeug der Eingangs genannten Art zu schaffen, die einfach aufgebaut ist und zuverlässig funktioniert..

Diese Aufgabe wird durch die Merkmale des Patentanspruchs 1 gelöst. Ein in der Führungsbahn geführter Steuerhebel, der Teil der Verriegelungseinrichtung ist, ist mit einem Mitnehmerstift versehen ist, der in eine am Schlitten ausgebildete Verriegelungskulisse eingreift, um die Entriegelung und die Verriegelung des Deckels während der Ausstellbewegung und auch während der Einschwenkbewegung des Deckels auf direkte Weise zu steuern. Dadurch, daß die Entriegelung der Verriegelungseinrichtung mittels einer am Schlitten ausgebildeten Verriegelungskulisse ausgeführt wird, erfolgt die Entriegelung direkt und ohne Umwege durch die Bewegung des Schlittens. Der konstruktive Aufwand kann verringert und insbesondere die Einhaltung von engen Fertigungs- und Montagetoleranzen stark vereinfacht werden. Weiterhin wird dadurch auch eine Entkoppelung der vertikalen Hubbewegung zum Überfahren der vorderen quer verlaufenden Dichtung von der Entriegelungsbewegung erzielt, wodurch es möglich ist, eine günstigere Abfolge der Bewegungen zu erreichen, so daß zuerst entriegelt und erst dann eine Hubbewegung veranlaßt wird, wodurch ein Verhaken der Steuerungsanordnung vermieden wird. Durch die Entkoppelung der vertikalen Hubbewegung von der Entriegelungsbewegung ist es möglich, die Hubbewegung derart auszulegen, daß sie ideal zum Überfahren der vorderen quer verlaufenden Dichtung ist, wobei eine Dichtung verwendet werden kann, die den Anforderungen, dieser Fuge zwischen Dachöffnung und Deckel dicht zu halten, optimal gerecht wird.

In einer vorteilhaften Ausführungsform wird eine Hubeinrichtung zum Anheben des vorderen Endabschnitts des Deckels im Bereich der vorderen Endlage des Deckels durch einen halbkreisförmigen, nach oben gerichteten Abschnitt im vorderen Endabschnitt der Führungsbahn gebildet. Der nach oben gerichtete Abschnitt ist abhängig von der verwendeten Dichtung derart gestaltet und ausgelegt, daß ein sicheres Überfahren der vorderen quer verlaufenden Dichtung erfolgen kann, ohne daß die Dichtung beim Überfahren gequetscht und beschädigt wird.

Weitere Ausgestaltungen ergeben sich aus den übrigen Unteransprüchen.

Bevorzugte Ausführungsbeispiele der Erfindung werden im folgenden unter Bezugnahme auf die beiliegenden Zeichnungen im Detail beschrieben. Es zeigen:
Fig. 1 eine Seitenansicht der Vorrichtung zum Steuern der Bewegung eines Schiebedachdeckels an einem Fahrzeug bei geschlossenem Deckel;
Fig. 2 eine Seitenansicht der Steuerungsvorrichtung mit ausgestelltem Deckel und bereits freigegebener Verriegelungseinrichtung;
Fig. 3 eine Seitenansicht der Steuerungsvorrichtung, bei der die vordere, nach oben gerichtete Hubbewegung zum Überfahren der vorderen Dichtung maximal ist;
Fig. 4 eine Seitenansicht der Steuerungsvorrichtung, bei der die vordere Hubbewegung zum Überfahren der Dichtung beendet ist und der Deckel in ausgestellter Position nach hinten verfährt.

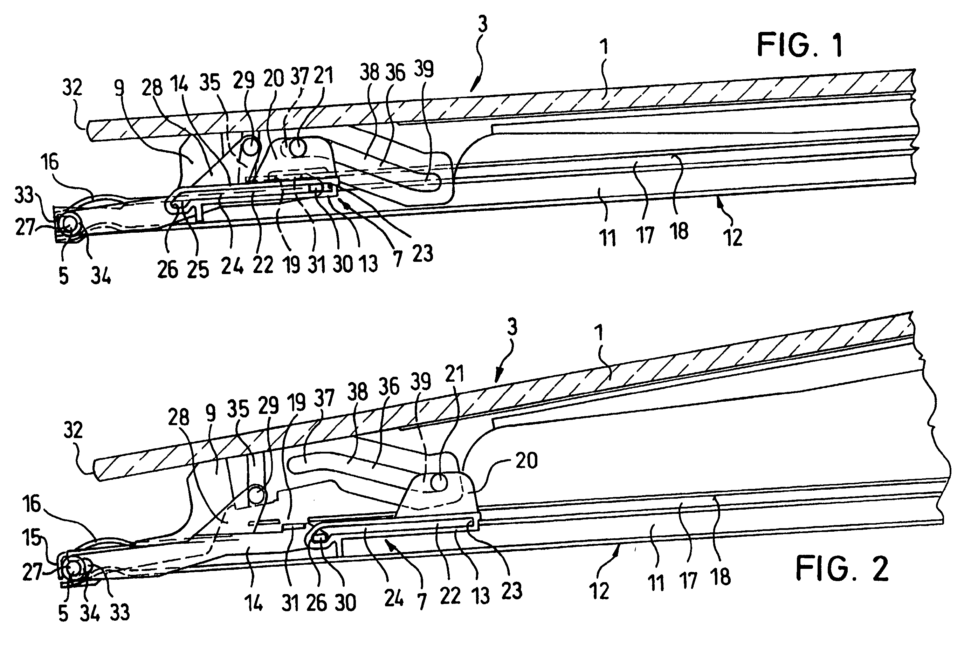

In Fig. 1 bis 4 ist eine Vorrichtung zum Steuern der Bewegung eines Deckels 1 für ein Schiebedach 3 an einem Fahrzeug (nicht dargestellt) in verschiedenen Positionen dargestellt, wobei in der Zeichnung links das vordere Ende des Fahrzeugs und in der Zeichnung rechts das hintere Ende des Fahrzeugs ist. Die Vorrichtung ist in der Lage, den Deckel 1 mittels einer vorderen Schwenkachse 5 nach außen oben aus einer in einer Dachhaut (nicht dargestellt) ausgebildeten Dachöffnung (nicht dargestellt) auszustellen, so daß sich die hintere Endkante des Deckels 1 (nicht dargestellt) oberhalb der Dachhaut befindet. Über eine Führungseinrichtung 7 wird der derart ausgestellte Deckel 1 nach hinten verfahren, um die Dachöffnung freizugeben. Der Deckel 1 ist dabei wie ein Spoiler schräg nach hinten oben angestellt. Sowohl die Schwenkbewegung (Ausstellbewegung) als auch die Verschiebebewegung werden durch einen einzigen Antrieb (nicht dargestellt) bewirkt. Die Dachöffnung (nicht dargestellt) ist mit einer umlaufenden Dichtung (nicht dargestellt) versehen, gegen die der Rand des Deckels 1 in geschlossenem Zustand dichtend gepreßt wird.

Auf der Unterseite, an beiden Seiten des Deckels 1 ist ein Deckelhalter 9 angeordnet, der sich als flaches blechförmiges Bauteil vertikal und in Längsrichtung des Fahrzeugs erstreckt. Unterhalb des Deckelhalters 9 ist die Führungseinrichtung 7 angeordnet, die mit dem Deckelhalter 9 verbunden ist. Die Führungseinrichtung 7 hat eine mit einer Führungsbahn 11 versehene Gleitschiene 12, einen in der Gleitschiene 12 gleitenden Schlitten 13 und einen Steuerhebel 14.

Die Gleitschiene 12 erstreckt sich horizontal in Längsrichtung des Fahrzeugs. Die Führungsbahn 11 hat an der vorderen Endseite einen Anschlag 15 und daran nach hinten anschließend einen nach oben gerichteten halbkreisförmigen Abschnitt 16. Parallel zur Führungsbahn 11 ist in der Gleitschiene 12 eine Nut 17 mit einer oberen Wand 18 ausgebildet. In einem vorderen Abschnitt der oberen Wand 18 ist eine Aussparung 19 vorgesehen. Der Schlitten 13 hat eine nach oben längs zum Fahrzeug sich erstreckende Lasche 20, an der ein Ausstellzapfen 21 senkrecht zur Lasche 20 befestigt ist. Benachbart zur Nut 17 in der Gleitschiene 12 ist im Schlitten 13 eine Verriegelungskulisse 22 ausgebildet, die sich im wesentlichen parallel zur Gleitschiene 12 erstreckt. Die Verriegelungskulisse 22 hat an der hinteren Endseite einen hinteren Anschlag 23, an den sich eine langer horizontaler Kulissenabschnitt 24 anschließt und einen sich daran anschließenden schräg nach vorne und unten gerichteten geneigten Kulissenabschnitt 25, an dessen vorderen Endabschnitt ein vorderer Anschlag 26 angeordnet ist. Der Schlitten 13 wird entlang der Gleitschiene 12 über einen in einer Hülse geführten Draht (nicht dargestellt) hin und her beweglich angetrieben.

Der als blechförmiges oder als druckgußförmiges Bauteil ausgebildete Steuerhebel 14 ist längs zum Fahrzeug unter dem Deckelhalter 9 und vor dem Schlitten 13 angeordnet. An der vorderen Endseite hat der Steuerhebel 14 einen sich seitlich erstreckenden erster Gleitzapfen 27, der in die Führungsbahn 11 eingreift und entlang der Führungsbahn 11 gleitet. Der Steuerhebel 14 ist um den ersten Gleitzapfen 27 nach oben und unten schwenkbar. In einem mittleren Abschnitt des Steuerhebels 14 ist ein nach oben vorspringender Fortsatz 28 angeordnet, an dem ein sich seitlich erstreckender zweiter Gleitzapfen 29 angeordnet ist. An der hinteren Endseite hat der Steuerhebel 14 einen sich seitlich erstreckenden Mitnehmerstift 30, der in die Verriegelungskulisse 22 des Schlittens 13 eingreift. Vor dem Mitnehmerstift 30 ist am Steuerhebel 14 ein Verriegelungszapfen 31 angeordnet, der in der Nut 17 der Gleitschiene 12 geführt wird und in der vorderen Endlage der Anordnung durch die Verriegelungskulisse 22 in die in der oberen Wand 18 ausgebildete Aussparung 19 bewegt werden und damit einen verriegelten Zustand einnehmen kann.

Der Deckelhalter 9 hat einen vorderen Abschnitt, der sich unterhalb des Deckels 1 über die Vorderkante 32 des Deckels 1 erstreckt. Im vorderen Abschnitt ist eine nach vorne geöffnete horizontal sich erstreckende als Gabel 33 ausgebildete U-förmige Öffnung vorgesehen. Die Gabel 33 greift in einen am ersten Gleitzapfen 27 des Steuerhebels 14 ausgebildeten zylindrischen Absatz 34, wobei der Deckel 1 zusammen mit dem Deckelhalter 9 um diesen ersten Gleitzapfen 27 nach oben und unten verschwenkbar ist, der somit die vordere Schwenkachse 5 ausbildet. In einem mittleren Abschnitt des Deckelhalters 9 ist eine Schiebekulisse 35 ausgebildet, die sich von oben nach unten schräg nach vorne gerichtet erstreckt. Der zweite Gleitzapfen 29 des Steuerhebels 14 ist in Eingriff mit der Schiebekulisse 35 und bewirkt, daß sich der Deckel 1 bei der Ausstellbewegung entlang der Gabel 33 gleitend um einen kleinen Betrag nach hinten bewegt, so daß die Vorderkante 32 des Deckels 1 etwas vom vorderen quer verlaufenden Abschnitt der umlaufenden Dichtung (nicht dargestellt) entfernt wird. In einem hinteren Abschnitt des Deckelhalters 9 ist eine Ausstellkulisse 36 angeordnet, in die der Ausstellzapfen 21 des Schlittens 13 eingreift. Die Ausstellkulisse 36 hat einen vorderen horizontalen Abschnitt 37, einen sich daran anschließenden mittleren schräg nach hinten abfallenden Abschnitt 38 und einen sich wiederum daran anschließenden hinteren horizontalen Abschnitt 39. Durch die Relativbewegung zwischen der Ausstellkulisse 36 und dem am angetriebenen Schlitten 13 befestigten Ausstellzapfen 21 wird die Schwenkbewegung (Ausstellbewegung und Einfahrbewegung) des Deckels 1 um die vordere Schwenkachse 5 bewirkt.

Nachstehend wird die Funktionsweise der Steuerungsvorrichtung ausgehend von der geschlossenen Position gemäß Fig. 1 anhand der Zeichnung näher beschrieben. In Fig. 1 verschließt der Deckel 1 die Dachöffnung (nicht dargestellt), wobei der Rand des Deckel 1 an einer umlaufenden Dichtung (nicht dargestellt) anliegt. In dieser Position befindet sich der erste Gleitzapfen 27 am vorderen Anschlag 15 der Führungsbahn 11. Der Schlitten 13 befindet sich in seiner vordersten Position, wobei sich der Ausstellzapfen 21 des Schlittens 13 im vorderen horizontalen Abschnitt 37 der Ausstellkulisse 36 und der zweite Gleitzapfen 29 des Steuerhebels 14 in der obersten Position der Schiebekulisse 35 befindet. Der am Steuerhebel 14 ausgebildete Verriegelungszapfen 31 wird durch die am Schlitten 13 ausgebildete Verriegelungskulisse 22 in verriegelter Stellung gehalten, wobei der Deckel 1 über den zweiten Gleitzapfen 29 und die Schiebekulisse 35 bezüglich einer Bewegung nach hinten entlang der Gleitschiene 12 arretiert ist. Wird der Schlitten 13 ausgehend von dieser Position nach hinten bewegt, so wird durch die Bewegung zwischen Ausstellkulisse 36 und Ausstellzapfen 21 der Deckel 1 mit seinem hinteren Endabschnitt um die vordere Schwenkachse 5 nach oben geschwenkt und durch die Bewegung zwischen dem zweiten Gleitzapfen 29 und der Schiebekulisse 35 entlang der Gabel 33 bzw. in Richtung der Ebene des Deckels 1 etwas nach hinten bewegt. Der horizontale Abschnitt 24 der Verriegelungskulisse 22 hält dabei den Verriegelungszapfen 31 solange in der Aussparung 19 bis der Ausstellzapfen 21 den mittleren schräg nach hinten abfallenden Kulissenabschnitt 38 abgefahren hat und in den hinteren horizontalen Kulissenabschnitt 39 der Ausstellkulisse 36 einmündet. An diesem Punkt gelangt der Mitnehmerstift 30 vom horizontalen Kulissenabschnitt 24 der Verriegelungskulisse 22 in den geneigten Abschnitt 25 der Verriegelungskulisse 22, wodurch der Verriegelungszapfen 31 aus der Aussparung 19 ausklinkt und damit die Verschiebung des ausgestellten Deckels 1 nach hinten über die Dachhaut (nicht dargestellt) entlang der Gleitschiene 12 freigegeben wird (siehe Fig. 2).

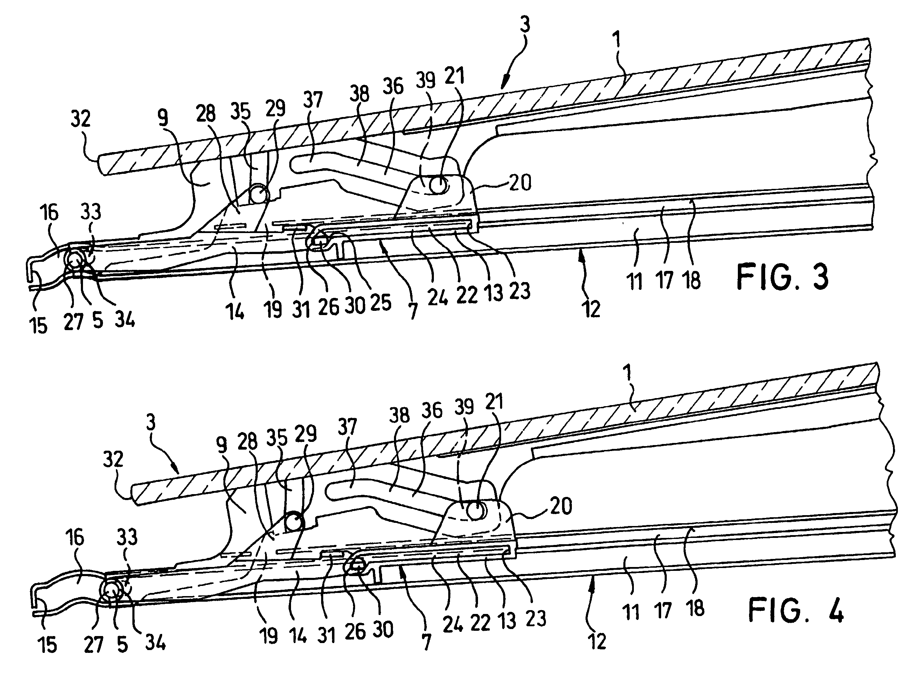

Bei der weiteren Bewegung des Schlittens 13 nach hinten wird nun die gesamte Anordnung mit ausgestelltem Deckel 1 nach hinten bewegt, wobei zunächst der erste Gleitzapfen 27 den halbkreisförmigen Abschnitt 16 der Führungsbahn 11 überfährt, wobei die Vorderkante 32 des Deckels 1 über den vorderen quer verlaufenden Abschnitt der umlaufenden Dichtung (nicht dargestellt) gehoben wird. Dabei vollzieht der Deckel 1 eine kleine Schwenkbewegung um den Ausstellzapfen 21 herum (siehe Fig. 3 und 4). Nach dem Überfahren des halbkreisförmigen Abschnitts 16 der Führungsbahn 11 gleitet die Anordnung in dieser Stellung nach hinten, bis das hintere Ende des Deckelhalters 9 benachbart zur hinteren Kante der Dachöffnung (nicht dargestellt) erreicht ist.

Die Schließbewegung erfolgt in umgekehrter Reihenfolge, wobei die Einfahrbewegung des Deckels 1 solange unterbunden wird, bis der erste Gleitzapfen 27 den vorderen Anschlag 15 der Führungsbahn 11 erreicht hat. Dies wird bewirkt, indem der Verriegelungszapfen 31 zwar gegen die obere Wand 18 der Nut 17 durch den geneigten Abschnitt 25 der Verriegelungskulisse 22 gedrückt wird, die Einfahrbewegung (Schwenkbewegung) des Deckels 1 um die vordere Schwenkachse 5 jedoch erst freigegeben wird, wenn der Verriegelungszapfen 31 wieder in die Aussparung 19 eingerastet ist.

### Bezugszeichenliste

- 1: Deckel
- 3: Schiebedach
- 5: vordere Schwenkachse
- 7: Führungseinrichtung
- 9: Deckelhalter
- 11: Führungsbahn
- 12: Gleitschiene
- 13: Schlitten
- 14: Steuerhebel
- 15: vorderer Anschlag der Führungsbahn
- 16: halbkreisförmiger Abschnitt der Führungsbahn
- 17: Nut
- 18: obere Wand
- 19: Aussparung
- 20: Lasche am Schlitten
- 21: Ausstellzapfen
- 22: Verriegelungskulisse
- 23: hinterer Anschlag der Verriegelungskulisse
- 24: horizontaler Abschnitt der Verriegelungskulisse
- 25: geneigter Abschnitt der Verreigelungskulise
- 26: vorderer Anschlag der Verriegelungskulisse
- 27: erster Gleitzapfen
- 28: Fortsatz
- 29: zweiter Gleitzapfen
- 30: Mitnehmerstift
- 31: Verriegelungszapfen
- 32: Vorderkante des Deckels
- 33: Gabel
- 34: Absatz am ersten Gleitzapfen
- 35: Schiebekulisse
- 36: Ausstellkulisse
- 37: vorderer horizontaler Abschnitt der Ausstellkulisse
- 38: schräger Abschnitt der Ausstellkulisse
- 39: hinterer horizontaler Abschnitt der Ausstellkulisse

## Patentansprüche

1. Vorrichtung zum Steuern der Bewegung eines Deckels (1) eines Schiebedachs (3) an einem Fahrzeug mit einer Schwenkeinrichtung (21, 36), mit der der Deckel (1) um eine vordere Schwenkachse (5) nach außen ausstellbar ist, mit einer Führungseinrichtung zum Verschieben des ausgestellten Deckels (1), wobei die Führungseinrichtung eine in einer Gleitschiene (12) ausgebildete Führungsbahn (11) aufweist, in der ein antreibbarer Schlitten (13) längs zum Fahrzeug verschiebbar gelagert ist, und die Ausstellbewegung des Deckels (1) durch die Bewegung des Schlittens (13) erfolgt, und mit einer Verriegelungseinrichtung (19, 22, 31), die die Bewegung des Deckels (1) entlang der Führungsbahn (11) während der Schwenkbewegung des Deckels (1) unterbindet, wobei die Entriegelung der Verriegelungseinrichtung (19, 22, 31) unmittelbar durch die Bewegung des Schlittens (13) ausführbar ist, **dadurch gekennzeichnet, daß** ein längs zur Führungsbahn (11) angeordneter Steuerhebel (14) vorgesehen ist, der über einen vorderen ersten Gleitzapfen (27) in der Führungsbahn (11) drehbar und verschiebbar gelagert ist, wobei der erste Gleitzapfen (27) die vordere Schwenkachse (5) bildet, daß am hinteren Ende des Steuerhebels (14) ein Mitnehmerstift (30) angeordnet ist, der in eine am Schlitten (13) ausgebildete Verriegelungskulisse (22) eingreift, und daß am Steuerhebel (14) ein Verriegelungszapfen (31) angeordnet ist, der in der vorderen Endposition des Steuerhebels (14) durch die Verriegelungskulisse (22) in eine an der Gleitschiene (12) ausgebildete Aussparung (19) einrastet.

2. Vorrichtung nach Anspruch 1 **gekennzeichnet durch** eine Hubeinrichtung (16, 27) zum Anheben des vorderen Endabschnitts des Deckels (1) im Bereich der vorderen Endlage des Deckels (1), wobei der Entriegelungsvorgang der Verriegelungseinrichtung vor dem Hubvorgang der Hubeinrichtung erfolgt.

3. Vorrichtung nach Anspruch 1, **dadurch gekennzeichnet, daß** die Hubeinrichtung durch einen halbkreisförmigen, nach oben gerichteten Abschnitt (16) im vorderen Endabschnitt der Führungsbahn (11) gebildet wird.

4. Vorrichtung nach einem der Ansprüche 1 bis 3, **dadurch gekennzeichnet, daß** die Schwenkeinrichtung durch eine zwischen dem Deckel (1) und dem Schlitten (13) ausgebildete Kulissenführung gebildet wird, wobei an einem am Deckel (1) angeordneten Deckelhalter (9) eine Ausstellkulisse (36) angeordnet ist, in die ein am Schlitten (13) angeordneter Ausstellzapfen (21) eingreift.

5. Vorrichtung nach Anspruch 4, **dadurch gekennzeichnet, daß** der Deckelhalter (9) eine Schiebekulisse (35) hat, in die ein am Steuerhebel (14) vorgesehener zweiter Gleitzapfen (29) eingreift, und daß der Deckelhalter (9) am vorderen Endabschnitt eine horizontal angeordnete Gabel (33) hat, die in den ersten Gleitzapfen (27) eingreift, wobei der Deckel (1) während der Schwenkbewegung um die Schwenkachse (5) eine Bewegung nach hinten entlang der Ebene des Deckels (1) erfährt.

## Claims

1. Device for controlling the movement of a panel (1) of a sliding roof (3) on a vehicle, having a pivoting device (21, 36), with which the panel (1) can be raised outwards about a front pivot axis (5), having a guide device for displacing the raised panel (1), the guide device having a guide track (11) formed in a sliding rail (12), in which track a carriage (13) which can be driven is mounted such that it can be displaced longitudinally in relation to the vehicle, and the raising movement of the panel (1) taking place as a result of the movement of the carriage (13), and having a locking device (19, 22, 31), which prevents the movement of the panel (1) along the guide track (11) during the pivoting movement of the panel (1), it being possible for the action of unlocking the locking device (19, 22, 31) to be executed directly by the movement of the carriage (13), **characterized in that** a control lever (14) arranged longitudinally with respect to the guide track (11) is provided, which is mounted via a front first sliding pin (27) such that it can be rotated and displaced in the guide track (11), the first sliding pin (27) forming the front pivot axis (5), **in that** at the rear end of the control lever (14) there is arranged a drive pin (30), which engages in a slotted locking guide (22) formed on the carriage (13), and **in that** on the control lever (14) there is arranged a locking pin (31) which, in the front end position of the control lever (14) latches through the slotted locking guide (22) into a cut-out (19) formed on the sliding rail (12).

2. Device according to Claim 1, **characterized by** a lifting device (16, 27) for raising the front end section of the panel (1) in the region of the front end position of the panel (1), the unlocking operation of the locking device taking place before the lifting operation of the lifting device.

3. Device according to Claim 1, **characterized in that** the lifting device is formed by a semicircular, upwardly oriented section (16) in the front end section of the guide track (11).

4. Device according to one of Claims 1 to 3, **characterized in that** the pivoting device is formed by a slotted guide formed between the panel (1) and the carriage (13), a slotted raising guide (36), in which a raising pin (21) arranged on the carriage (13) engages, being arranged on a panel holder (9) arranged on the panel (1).

5. Device according to Claim 4, **characterized in that** the panel holder (9) has a slotted sliding guide (35), in which a second sliding pin (29) provided on the control lever (14) engages, and **in that** the panel holder (9) has in the front end section a horizontally arranged fork (33), which engages in the first sliding pin (27), the panel (1) experiencing a rearward movement along the plane of the panel (1) during the pivoting movement about the pivot axis (5).

## Revendications

1. Dispositif d'actionnement pour le déplacement d'un panneau (1) d'un toit coulissant (3) sur un véhicule, avec un équipement de pivotement (21, 25) par lequel le panneau (1) peut être relevé vers l'extérieur autour d'un axe de pivotement avant (5), avec un équipement de guidage pour faire coulisser le panneau relevé (1), l'équipement de guidage présentant une voie de guidage (11) configurée dans une glissière (12) et dans laquelle un coulisseau entraînable (13) est monté à coulissement le long du véhicule, et le mouvement de relevage du panneau (1) s'effectuant par le mouvement du coulisseau (13), et avec un équipement de verrouillage (19, 22, 31) qui empêche le déplacement du panneau (1) le long de la voie de guidage (11) pendant le mouvement de pivotement du panneau (1), le déverrouillage de l'équipement de verrouillage (19, 22, 31) pouvant s'effectuer directement par le mouvement du coulisseau (13), **caractérisé en ce qu'**il est prévu un levier d'actionnement (14) qui est disposé le long de la voie de guidage (11) et qui, au moyen d'un premier tenon coulissant avant (27), est monté à rotation et à coulissement dans la voie de guidage (11), le premier tenon coulissant (27) constituant l'axe de pivotement avant (5), **en ce qu'**une broche entraîneuse (30) est disposée à l'extrémité arrière du levier d'actionnement (14) et s'engage dans une coulisse de verrouillage (22) configurée sur le coulisseau (13), et **en ce qu'**un tenon de verrouillage (31) est disposé sur le levier d'actionnement (14) et, dans la position finale avant du levier d'actionnement (14), s'enclenche par la coulisse de verrouillage (22) dans un évidement (19) configuré sur la glissière (12).

2. Dispositif selon la revendication 1, **caractérisé par** un équipement de levage (16, 27) pour soulever la partie terminale avant du panneau (1) dans la région de la position finale avant du panneau (1), le processus de déverrouillage de l'équipement de déverrouillage s'effectuant avant le processus de levage de l'équipement de levage.

3. Dispositif selon la revendication 1, **caractérisé en ce que** l'équipement de levage est formé par une partie semi-circulaire (16), dirigée vers le haut, dans la partie terminale avant de la voie de guidage (11).

4. Dispositif selon l'une des revendications 1 à 3, **caractérisé en ce que** l'équipement de pivotement est formé par un guide à coulisse configuré entre le panneau (1) et le coulisseau (13), une coulisse de relevage (36), dans laquelle s'engage un tenon de relevage (21) disposé sur le coulisseau (13), étant disposée sur un support de panneau (9) disposé sur le panneau (1).

5. Dispositif selon la revendication 4, **caractérisé en ce que** le support de panneau (9) possède une coulisse (35) dans laquelle s'engage un deuxième tenon coulissant (29) prévu sur le levier d'actionnement (14), et **en ce que** le support de panneau (9) possède sur la partie terminale avant une fourche (33) disposée horizontalement qui s'engage dans le premier tenon coulissant (27), le panneau (1) effectuant, pendant le mouvement de pivotement autour de l'axe de pivotement (5), un déplacement vers l'arrière le long du plan du panneau (1).
